# FASCICULE DE BREVET EUROPEEN

(11) **EP 3 826 316 B1**
(45) Date de publication et mention de la délivrance du brevet: **03.01.2024**
(21) Numéro de dépôt: 20207820.0
(22) Date de dépôt: 16.11.2020
(51) Int. Cl.: H04N 21/439, H04N 21/485

(54) **ÉQUIPEMENT DÉCODEUR GÉNÉRANT UN ORDRE D'UN PROFIL AUDIO À APPLIQUER**
DECODIERGERÄT, DAS EINE ANWEISUNG EINES ANZUWENDENDEN AUDIOPROFILS ERZEUGT
DECODER DEVICE GENERATING AN ORDER OF AN AUDIO PROFILE TO BE APPLIED

(30) Priorité: 19.11.2019 FR 1912920
(43) Date de publication de la demande: 26.05.2021
(73) Titulaire: Sagemcom Broadband SAS, 92270 Bois-Colombes (FR)
(72) Inventeur: BERGER, Jérôme, 92500 Rueil Malmaison (FR)
(74) Mandataire: Decorchemont, Audrey Véronique Christèle

(56) Documents cités:
- US-A1- 2003 007 001
- US-A1- 2017 134 821

## Description

L'invention concerne le domaine de la restitution audio/vidéo via un ou des équipements de restitution.

### ARRIERE PLAN DE L'INVENTION

Il est aujourd'hui très courant, dans les installations multimédia domestiques modernes, de connecter un équipement décodeur à un équipement de restitution audio/vidéo et à un ou plusieurs équipements de restitution audio distincts de l'équipement de restitution audio/vidéo, dans le but d'améliorer l'expérience acoustique d'un utilisateur lors de la restitution d'un contenu audio/vidéo.

Toujours dans le but d'améliorer l'expérience auditive de l'utilisateur, il est possible de jouer sur différents paramètres du ou des équipement(s) de restitution audio par exemple d'augmenter les basses ou de filtrer certaines fréquences. Ces paramètres sont généralement ajustables par l'utilisateur soit en agissant directement sur l'équipement de restitution audio (bouton, variateur, ...) soit en modifiant les paramètres à partir d'un menu de configuration projetée par l'équipement de restitution audio/vidéo en liaison avec l'équipement de restitution audio.

Ceci oblige toutefois l'utilisateur à modifier lui-même les différents paramètres ce qui peut s'avérer relativement fastidieux. En outre, l'utilisateur ne choisit pas nécessairement les paramètres les plus adaptés.

Le document US 2003/007001 décrit un procédé et un système pour régler des paramètres vidéo et audio pour un dispositif de sortie multimédia. Le système comprend une unité de commande ayant une entrée de signal multimédia. Le signal multimédia comprend au moins une composante parmi une vidéo et une composante audio, ainsi qu'une composante informationnelle associée. L'unité de commande extrait la composante informationnelle et ajuste au moins un réglage du dispositif de sortie multimédia sur la base de la composante informationnelle.

### OBJET DE L'INVENTION

Un but de l'invention est de proposer un équipement décodeur permettant d'améliorer encore davantage l'expérience acoustique de l'utilisateur.

### RESUME DE L'INVENTION

En vue de la réalisation de ce but, on propose une installation selon la revendication 1..

A partir de l'ordre transmis, l'équipement de restitution audio peut adapter en service le signal audio reçu de l'équipement décodeur. On assure ainsi une adaptation d'au moins un des paramètres du signal audio retransmis par l'équipement de restitution audio selon le flux audio/vidéo qui est en entrée de l'équipement décodeur ce qui permet à l'utilisateur de pouvoir profiter d'une très bonne expérience acoustique.

On retient que l'équipement décodeur fournit à l'équipement de restitution audio à la fois le signal audio brut et à la fois un ordre d'adaptation dudit signal brut, l'adaptation se faisant ensuite au sein de l'équipement de restitution audio.

Ceci permet d'avoir une adaptation plus efficace. En particulier, l'équipement décodeur peut ainsi être un équipement relativement simple (voire même un smartphone) puisque que c'est l'équipement de restitution audio qui applique lui-même le traitement au signal audio pour le modifier au vu de la au moins une information extraite par l'équipement décodeur.

L'information fournie est donc un horaire d'un programme contenu dans le flux d'entrée audio/vidéo et restitué en service par les équipements de restitution audio et de restitution vidéo ou d'un programme qui sera ultérieurement restitué en service par les équipements de restitution audio et de restitution vidéo.

Optionnellement les moyens de traitement extraient également des métadonnées d'entrée une autre information additionnelle qui est un indicateur du type de contenu du flux d'entrée audio/vidéo.

Optionnellement les moyens de traitement comprennent au moins une table mettant en relation des paramètres définissant au moins en partie un profil audio pour chaque indicateur.

Optionnellement les moyens de traitement comprennent au moins une table mettant en relation pour chaque indicateur, un identifiant de profil audio.

Optionnellement la au moins une information est un horaire de fin d'un programme contenu dans le flux d'entrée audio/vidéo et restitué en service par les équipements de restitution audio et de restitution vidéo. Optionnellement les moyens de traitement extraient également des métadonnées d'entrée une information additionnelle qui est un horaire de fin d'un programme qui est contenu dans le flux d'entrée audio/vidéo et qui sera restitué en service par les équipements de restitution audio et de restitution vidéo après le programme en cours de restitution par les équipements de de restitution audio et de restitution vidéo.

Optionnellement l'installation est configurée pour aligner un changement de profil audio lors d'un changement de programme.

Optionnellement le profil audio est également fonction de l'horaire à laquelle le flux audio/vidéo est restitué. Optionnellement l'installation est configurée pour calculer une période de transition entre deux profils audio.

Optionnellement l'installation est configurée pour ordonner à l'équipement de restitution audio de calculer une période de transition entre deux profils audio. Optionnellement l'équipement décodeur est configuré pour combiner deux profils audio.

Optionnellement l'équipement décodeur est configuré pour ordonner à l'équipement de restitution audio de combiner deux profils audio.

Optionnellement le profil audio est défini au moins par un paramètre d'égalisation du signal audio.

Le profil audio contient ainsi une ou des informations sur l'égalisation du signal audio.

Optionnellement le profil audio est défini par au moins un effet compresseur ou limiteur.

Le profil audio contient ainsi une ou des informations sur par exemple la compression de dynamique sonore. Optionnellement la transition entre deux profils est provoquée par un changement d'horaire à laquelle le flux audio/vidéo est restitué et/ou à un changement de programme contenu dans le flux d'entrée audio/vidéo et restitué en service par les équipements de restitution audio et de restitution vidéo.

La transition entre profils s'opère ainsi lors d'un changement de programme et/ou lors d'un changement d'horaire (par exemple passage à un profil « nuit »). Optionnellement les moyens de traitement comportent au moins une table mettant en relation des paramètres définissant au moins en partie un profil audio à des identifiants de profil audio.

Optionnellement l'équipement de restitution audio est configuré pour opérer un changement de profil audio à un horaire donné indiqué par l'équipement décodeur. Optionnellement l'équipement de restitution audio est configuré pour assurer une période de transition entre deux profils audio.

Optionnellement l'équipement de restitution audio est configuré pour assurer une combinaison de deux profils audio.

Optionnellement pour au moins un paramètre audio, l'équipement de restitution audio copie le signal audio reçu en service de l'équipement décodeur, applique un paramètre audio sur chaque copie et combine les deux copies pour récupérer un signal audio combiné.

Optionnellement pour au moins un paramètre audio, l'équipement de restitution audio applique en service un paramètre audio combiné directement sur le signal audio reçu de l'équipement décodeur.

L'invention concerne également un procédé selon la revendication 20.

L'invention concerne également un programme d'ordinateur selon la revendication 21.

L'invention concerne également un support d'enregistrement lisible par ordinateur selon la revendication 22. D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées parmi lesquelles :
[Fig. 1] la figure 1 représente une installation selon un mode de réalisation particulier de l'invention ;
[Fig. 2] la figure 2 est un tableau représentant des exemples d'indicateurs de types de contenu transitant dans l'installation illustrée à la figure 1 ;
[Fig. 3a] la figure 3a est un tableau donnant des exemples de profils audio associés à des indicateurs de types de contenu illustrés à la figure 2 ;
[Fig. 3b] la figure 3b illustre un premier exemple d'ordre de profil audio à appliquer généré à partir du tableau illustré à la figure 3a ;
[Fig. 3c] la figure 3c illustre un deuxième exemple d'ordre de profil audio à appliquer généré à partir du tableau illustré à la figure 3a ;
[Fig. 4a] la figure 4a est un tableau donnant des exemples d'identifiants de profils audio associés à des indicateurs de types de contenu illustrés à la figure 2 ;
[Fig. 4b] la figure 4b est un tableau donnant des exemples de profils audio associés à des de profils audio illustrés à la figure 4a ;
[Fig. 4c] la figure 4c illustre un troisième exemple d'ordre de profil audio à appliquer généré à partir du tableau illustré à la figure 4a ;
[Fig. 5] la figure 5 illustre un quatrième exemple d'ordre de profil audio à appliquer transitant dans l'installation illustrée à la figure 1 ;
[Fig. 6] la figure 6 est un diagramme illustrant une adaptation d'un signal audio en fonction de l'horaire et d'au moins une information issue des métadonnées par le dispositif illustré à la figure 1 selon une première possibilité ;
[Fig. 7] la figure 7 est un diagramme illustrant une adaptation d'un signal audio en fonction de l'horaire et d'au moins une information issue des métadonnées par le dispositif illustré à la figure 1 selon une deuxième possibilité ;
[Fig. 8] la figure 8 illustre un cinquième exemple d'ordre de profil audio à appliquer transitant dans l'installation illustrée à la figure 1 ;
[Fig. 9] la figure 9 schématise la combinaison de deux jeux de paramètres audio par l'installation illustrée à la figure 1 selon une première variante ;
[Fig. 10] la figure 10 schématise la combinaison de deux jeux de paramètres audio par l'installation illustrée à la figure 1 selon une deuxième variante.

### DESCRIPTION DETAILLEE DE L'INVENTION

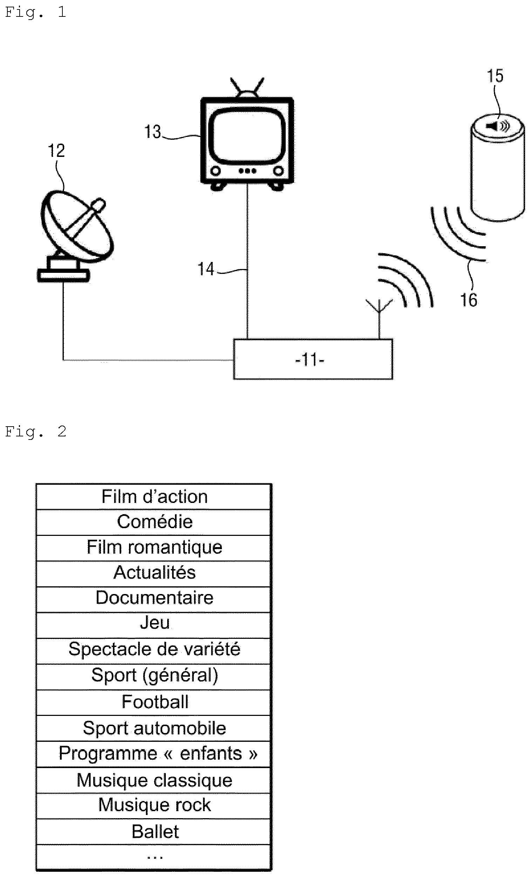

En référence à la figure 1, l'installation selon un mode de réalisation particulier est une installation multimédia comprenant un équipement décodeur 11 relié ici à un équipement de restitution vidéo, qui est ici en réalité un équipement de restitution audio/vidéo 13, et à un équipement de restitution audio 15. L'équipement de restitution audio 15 n'est pas compris dans l'équipement décodeur 11 : ils forment deux entités distinctes en communication filaire ou sans fil.

L'équipement décodeur 11 est ici un boîtier décodeur, l'équipement de restitution audio/vidéo 13 est une télévision, et l'équipement de restitution audio 15 est une enceinte externe.

L'équipement de restitution audio/vidéo 13 est connecté à une sortie audio/vidéo de l'équipement décodeur 11. L'équipement de restitution audio 15 est connecté à une sortie audio de l'équipement décodeur 11.

L'équipement décodeur 11 comporte des moyens de traitement permettant entre autres de traiter le flux d'entrée audio/vidéo.

Ainsi par « sortie audio/vidéo », on entend une sortie sur laquelle l'équipement décodeur 11 applique un signal audio/vidéo pour mettre en oeuvre une restitution audio et une restitution vidéo via (au moins) un équipement de restitution audio/vidéo 13 (ici la télévision). Par « sortie audio », on entend une sortie sur laquelle l'équipement décodeur 11 applique un signal audio pour mettre en oeuvre une restitution audio via (au moins) un équipement de restitution audio 15 (ici l'enceinte externe).

De manière correspondante l'équipement de restitution audio 15 comporte des moyens de traitement qui lui sont propres pour traiter le signal audio transmis par l'équipement décodeur, signal réceptionné au niveau d'une interface de communication de l'équipement de restitution audio 15.

La liaison audio/vidéo principale 14 entre l'équipement décodeur 11 et l'équipement de restitution audio/vidéo, et la liaison audio secondaire 16 entre l'équipement décodeur 11 et l'équipement de restitution audio 15 peuvent être des liaisons filaires ou sans fil. Tout type de technologie peut être utilisé pour réaliser ces liaisons : optique, radioélectrique, etc. Les liens peuvent ainsi avoir différentes natures « physiques » (par exemple en HDMI, *Toslink,* RCA, etc.) et/ou utiliser différents protocoles « informatiques » (par exemple en *Bluetooth,* UPnP, *Airplay, Chromecast,* etc).

Ainsi et selon une option non limitative, l'équipement de restitution audio/vidéo 13 est en relation HDMI avec l'équipement décodeur 11 et l'équipement de restitution audio 15 est connecté par un réseau local. Le réseau local est par exemple un réseau sans fil de type Wi-Fi ou bien un réseau filaire de type Ethernet. Selon une variante, le réseau local comporte un routeur Wi-Fi, l'équipement décodeur 11 est relié audit routeur Wi-Fi par une connexion filaire de type Ethernet, et le routeur Wi-Fi est connecté à l'équipement de restitution audio par une connexion sans fil de type Wi-Fi.

L'équipement décodeur 11 acquiert au niveau d'une interface de communication de l'équipement décodeur 11, un flux multimédia d'entrée qui peut provenir d'un ou de plusieurs réseaux de diffusion 12. Les réseaux de diffusion 12 peuvent être de tout type. Ainsi, selon un premier mode de réalisation, le réseau de diffusion 12 est un réseau de télévision par satellite, et l'équipement décodeur 11 reçoit le flux multimédia d'entrée à travers une antenne parabolique. Selon un deuxième mode de réalisation, le réseau de diffusion 12 est une connexion Internet et l'équipement décodeur 11 reçoit le flux multimédia d'entrée à travers ladite connexion Internet. Selon un troisième mode de réalisation, le réseau de diffusion 12 est un réseau de télévision numérique terrestre (TNT) ou un réseau de télévision par câble. De manière globale, le réseau de diffusion 12 peut être de source diverse : satellite, câble, IP, TNT (réseau de Télévision Numérique Terrestre), flux vidéo stocké localement, etc.

De façon particulière, le flux multimédia d'entrée réceptionné par l'équipement décodeur 11 comporte des métadonnées et un flux audio/vidéo d'entrée comprenant une partie audio et une partie vidéo qui sont synchronisées entre elles.

Les métadonnées contiennent au moins une information sur ledit flux audio/vidéo d'entrée. Les métadonnées sont par exemple au format DVB-SI. Ce type de format est décrit notamment dans la norme ETSIEN300468 « Digital Video Broadcasting Spécification for Service Information in DVB systems ». Les métadonnées peuvent également être incluses dans un manifeste MPD ou être de tout autre type. Le type des métadonnées dépendra vraisemblablement du réseau de diffusion 12 en relation avec l'équipement décodeur 11. Les moyens de traitement de l'équipement décodeur permettent également ici d'extraire des métadonnées au moins une information sur le flux audio/vidéo d'entrée. Selon une première option, l'information extraite des métadonnées est un indicateur du type de contenu du flux audio/vidéo d'entrée c'est-à-dire du programme qui sera restitué par les différents équipements de restitution. Si les métadonnées sont au format DVB-SI décrit, elles comportent un indicateur de type de contenu tel que spécifié au paragraphe 6.2.9 de la norme ETSIEN300468 et l'équipement décodeur 11 extrait donc ledit indicateur. La norme ETSIEN300468 présente des exemples d'indicateurs de types de contenu au niveau de son tableau 28.

Le tableau illustré à la figure 2 donne quelques exemples d'indicateurs de type de contenu d'un flux audio/vidéo d'entrée : film d'action, comédie, film romantique, actualités, documentaire, jeu, spectacle de variété, sport en général, football, sport automobile, programme « enfant », musique classique, musique rock, ballet, etc. L'indicateur de type de contenu décrit donc la catégorie du programme visualisé sur l'équipement de restitution audio/vidéo.

L'indicateur de type de contenu est ici une succession de caractères alphanumériques et par exemple un nom.

L'équipement décodeur 11 génère à partir de l'indicateur du type de contenu un ordre d'un profil audio à appliquer, profil audio qui est donc fonction dudit type de contenu, à destination de l'équipement de restitution audio 15. L'équipement décodeur 11 est ainsi adapté pour commander l'équipement de restitution audio 15 en vue de lui faire appliquer différents profils audio.

Les ordres peuvent par exemple être transmis de l'équipement décodeur 11 à l'équipement de restitution audio 15 à l'aide d'un protocole de commande tel que le protocole JSON-RPC (on pourra se reporter au site https://www.jsonrpc.org pour davantage d'informations) ou le protocole CORBA (on pourra se reporter au lien https://fr.wikipedia.org/wiki/Common_Object_Request_Broke r_Architecture pour davantage d'informations).

Un profil audio est défini par un jeu de paramètres affectant la restitution du son par l'équipement de restitution audio 15. Un profil audio peut par exemple être défini en partie au moins par une courbe d'égalisation qui spécifie un gain à appliquer en fonction de la fréquence, afin de faire ressortir ou d'atténuer les basses, les médiums ou les aigus. Un profil audio peut aussi être défini en partie au moins par un ou des filtres à activer ou à désactiver, tels que par exemple un filtre de réverbération ou un filtre atténuateur de bruit de fond. Lorsque le profil audio est défini par au moins un filtre à activer, il peut aussi être défini par au moins un paramètre spécifique à appliquer sur ledit filtre.

De manière non limitative, les paramètres permettant de définir un profil audio peuvent être une valeur de gain à appliquer sur les basses, une valeur de gain à appliquer sur les médiums, une valeur de gain à appliquer sur les aigus, l'activation ou non d'un filtre de réverbération, le niveau sonore dudit filtre, la durée d'application dudit filtre ...

Afin de générer les ordres de profils audio à appliquer, l'équipement décodeur 11 comporte une table qui permet de repérer le profil audio à appliquer pour chaque indicateur de type de contenu.

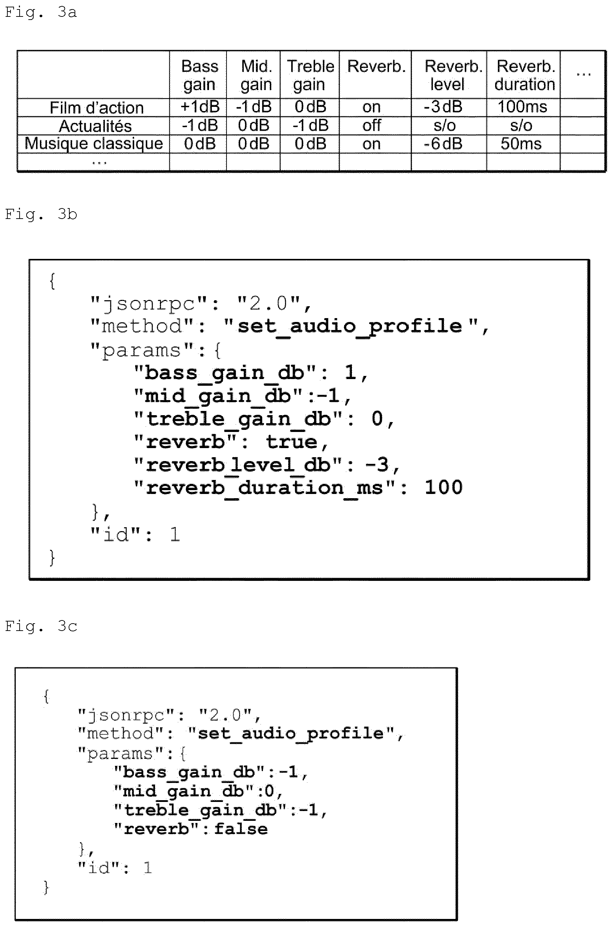

Selon une première variante, cette table donne pour chaque indicateur de type de contenu une définition d'au moins une partie des paramètres constituant le profil audio correspondant et de préférence de tous lesdits paramètres. La figure 3a montre un exemple d'une telle table. A chaque indicateur de type de contenu (film d'action, actualités, musique classique ...) est associé le jeu de paramètres du profil audio correspondant (valeur de gain à appliquer sur les basses, valeur de gain à appliquer sur les médiums, valeur de gain à appliquer sur les aigus, activation ou non d'un filtre de réverbération, niveau sonore dudit filtre et durée d'application dudit filtre ...).

En service, l'équipement décodeur 11 réceptionne le flux d'entrée multimédia et le décode pour en extraire le flux audio/vidéo d'une part et les métadonnées d'autre part. L'équipement décodeur 11 extrait de nouveau dudit flux audio/vidéo un signal vidéo à destination de l'équipement de restitution audio/vidéo 13 et un signal audio à destination de l'équipement de restitution audio 15 et éventuellement à des enceintes intégrées de l'équipement de restitution audio/vidéo 13.

Par ailleurs, l'équipement décodeur 11 extrait des métadonnées au moins l'indicateur du type de contenu du flux audio/vidéo et déduit de la table le jeu de paramètres constituant le profil audio correspondant. L'équipement décodeur 11 transmet ainsi à l'équipement de restitution audio 15 un ordre d'un profil audio à appliquer, ordre se présentant ici sous la forme du jeu de paramètres à appliquer pour générer ce profil. Les figures 3b et 3c donnent des exemples d'ordres envoyés par l'équipement décodeur 11 vers l'équipement de restitution audio 15 (ordres ici écrits selon un exemple non limitatif via le protocole JSON-RPC).

L'équipement de restitution audio 15 récupère ainsi à la fois le signal audio et l'ordre et les moyens de traitement dudit équipement de restitution audio 15 modifient en conséquence le signal audio pour appliquer les paramètres contenus dans l'ordre. Le signal audio appliqué par l'équipement de restitution audio 15 est ainsi fonction du programme visionné au niveau de l'équipement de restitution audio/vidéo 13.

On note ainsi que l'équipement décodeur 11 n'adapte pas le flux audio/vidéo mais effectue uniquement un traitement permettant de fournir un signal audio sur au moins la borne de sortie liée à l'équipement de restitution audio 15 et un signal vidéo sur la borne de sortie liée à l'équipement de restitution audio/vidéo 13. Dans l'invention c'est bien l'équipement de restitution audio 15 qui modifie lui-même le signal audio transmis par l'équipement décodeur 11 pour l'adapter.

On retient également que l'ordre transmis par l'équipement décodeur 11 n'est pas l'indicateur du type de contenu mais directement les paramètres modifiant la restitution du son. C'est bien l'équipement décodeur 11 qui détermine le type de contenu visualisé sur l'équipement de restitution audio/vidéo 13 et non l'équipement de restitution audio 15.

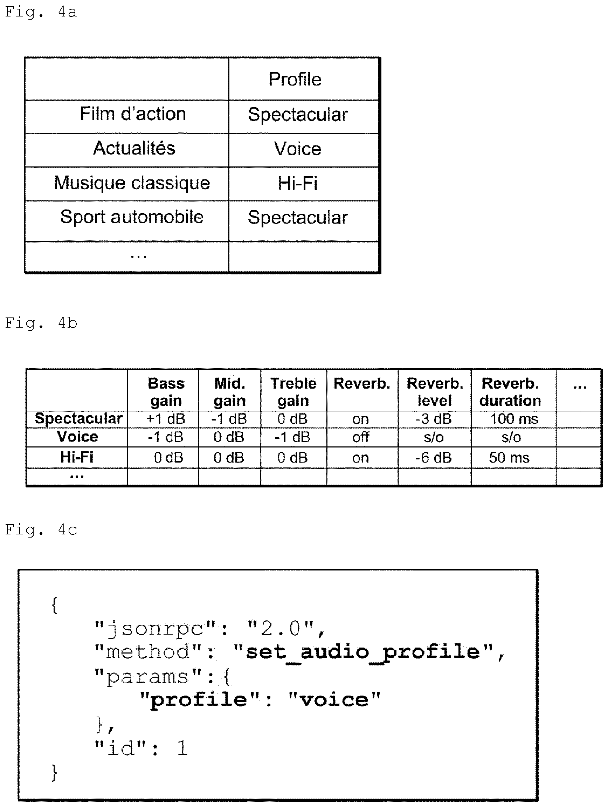

Selon une deuxième variante, cette table définit pour chaque indicateur de type de contenu un identifiant du profil audio correspondant. La figure 4a montre un exemple d'une telle table. Pour chaque indicateur de type de contenu (film d'action, actualités, musique classique, sport automobile ...) est associé un identifiant du profil audio correspondant (spectaculaire, voix, hi-fi, spectaculaire ...). L'identifiant du profil audio décrit ainsi l'effet du profil audio recherché. Un identifiant de profil audio n'est donc pas un indicateur du type de contenu.

L'identifiant du profil audio est ici une succession de caractères alphanumériques et par exemple un nom.

De manière correspondante, l'équipement de restitution audio 15 comporte une table donnant pour chaque identifiant de profil audio une définition d'au moins une partie des paramètres constituant le profil audio correspondant et de préférence de tous lesdits paramètres. La figure 4b montre un exemple d'une table. A chaque identifiant de profil audio (spectaculaire, voix, hi-fi ...) est associé le jeu de paramètres du profil audio correspondant (valeur de gain à appliquer sur les basses, valeur de gain à appliquer sur les médiums, valeur de gain à appliquer sur les aigus, activation ou non d'un filtre de réverbération, niveau sonore dudit filtre et durée d'application dudit filtre ...).

En service, l'équipement décodeur 11 réceptionne le flux d'entrée multimédia et le décode pour en extraire le flux audio/vidéo d'une part et les métadonnées d'autre part. L'équipement décodeur 11 extrait de nouveau dudit flux audio/vidéo un signal vidéo à destination de l'équipement de restitution audio/vidéo 13 et un signal audio à destination de l'équipement de restitution audio 15 et éventuellement à des enceintes intégrées de l'équipement de restitution audio/vidéo 13.

Par ailleurs, l'équipement décodeur 11 extrait des métadonnées au moins l'indicateur du type de contenu du flux audio/vidéo et déduit de la table l'identifiant du profil audio correspondant.

L'équipement décodeur 11 transmet en conséquence à l'équipement de restitution audio 15 un ordre d'un profil audio à appliquer, ordre se présentant ici sous la forme de l'identifiant dudit profil. La figure 4c donne un exemple d'ordre envoyé par l'équipement décodeur 11 à l'équipement de restitution audio 15 (ordre ici écrit selon un exemple non limitatif via le protocole JSON-RPC). L'équipement de restitution audio 15 réceptionne ainsi à la fois le signal audio et l'ordre correspondant. A partir de sa propre table, les moyens de traitement de l'équipement de restitution audio 15 récupèrent le jeu de paramètres constituant le profil audio correspondant. Lesdits moyens de traitement de l'équipement de restitution audio 15 modifient le signal audio en conséquence pour appliquer lesdits paramètres.

On note ainsi que l'équipement décodeur 11 n'adapte pas le flux audio/vidéo mais effectue uniquement un traitement permettant de fournir un signal audio sur au moins la borne de sortie liée à l'équipement de restitution audio 15 et un signal vidéo sur la borne de sortie liée à l'équipement de restitution audio/vidéo 13. Dans l'invention c'est bien l'équipement de restitution audio 15 qui modifie lui-même le signal audio transmis par l'équipement décodeur 11 pour l'adapter.

On retient également que l'ordre transmis par l'équipement décodeur 11 n'est pas l'indicateur du type de contenu mais directement l'identifiant du profil à appliquer. C'est bien l'équipement décodeur 11 qui détermine le type de contenu visualisé sur l'équipement de restitution audio/vidéo 13 et non l'équipement de restitution audio 15.

Deux équipements de restitution audio différents peuvent avoir des tables propres différentes et peuvent en conséquence associer des paramètres différents à un même identifiant de profil provenant de l'équipement décodeur 11 : la deuxième variante permet donc avantageusement de s'adapter aux caractéristiques précises des haut-parleurs respectifs des deux équipements de restitution audio.

Une troisième variante mixant la première variante et la deuxième variante est également applicable.

Dans cette troisième variante, l'équipement décodeur 11 comporte une première table donnant pour chaque indicateur de type de contenu une définition d'au moins une partie des paramètres constituant le profil audio correspondant (similaire à ce qui a été illustré en figure 3a) et une deuxième table donnant pour chaque indicateur de type de contenu un identifiant du profil audio correspondant (similaire à ce qui a été illustré en figure 4a). L'équipement de restitution audio/vidéo 15 comporte de manière correspondante une troisième table donnant pour chaque identifiant de profil audio une définition d'au moins une partie des paramètres constituant le profil audio correspondant (similaire à ce qui a été illustré en figure 4b) .

En service, l'équipement décodeur 11 réceptionne le flux d'entrée multimédia et le décode pour en extraire le flux audio/vidéo d'une part et les métadonnées d'autre part. L'équipement décodeur 11 extrait de nouveau dudit flux audio/vidéo un signal vidéo à destination de l'équipement de restitution audio/vidéo 13 et un signal audio à destination de l'équipement de restitution audio 15 et éventuellement à des enceintes intégrées de l'équipement de restitution audio/vidéo 13.

Par ailleurs, l'équipement décodeur 11 extrait des métadonnées au moins l'indicateur du type de contenu du flux audio/vidéo et déduit de la première table les paramètres profil audio correspondant et de la deuxième table l'identifiant du profil audio correspondant.

L'équipement décodeur 11 transmet en conséquence à l'équipement de restitution audio 15 un ordre d'un profil audio à appliquer, ordre se présentant ici sous la forme de l'identifiant dudit profil et des paramètres présents dans la première table.

A partir de cet ordre, si l'équipement de restitution audio 15 ne reconnaît pas l'identifiant envoyé par l'équipement décodeur 11, alors l'équipement de restitution audio 15 utilise les paramètres présents dans l'ordre (issus de la première table) pour adapter le signal audio (similairement à ce qui a été décrit dans la première variante).

En revanche si l'équipement de restitution audio 15 reconnaît l'identifiant envoyé par l'équipement décodeur 11, alors :
- Selon un mode particulier de réalisation, l'équipement de restitution audio 15 ignore les paramètres envoyés par l'équipement décodeur 11 et utilise les paramètres provenant de sa propre troisième table à partir de l'identifiant (similairement à ce qui a été décrit dans la deuxième variante) ;
- Selon un autre mode particulier de réalisation, l'équipement de restitution audio 15 utilise les paramètres envoyés par l'équipement décodeur 11 et complète les éventuels paramètres manquants par les valeurs contenues dans sa propre troisième table ;
- Selon encore un autre mode particulier de réalisation, l'équipement de restitution audio 15 combine les paramètres envoyés par l'équipement décodeur 11 avec les paramètres contenus dans sa propre troisième table et applique les paramètres combinés. On décrira plus loin dans la présente demande comment l'équipement de restitution audio 15 peut effectuer une telle combinaison.

Cette troisième variante permet de pouvoir gérer les éventuelles évolutions d'une installation en permettant à une version d'équipement de restitution audio 15 plus récente que l'équipement décodeur 11 de disposer de nouveaux paramètres associés à un profil audio et de pouvoir les appliquer, alors que l'élément décodeur 11, plus ancien, ne connaîtra pas ces nouveaux paramètres. En outre, cette troisième variante permet d'utiliser en priorité les données de l'équipement décodeur 11 (données qui peuvent être personnalisées par l'utilisateur via par exemple un menu de configuration affiché sur l'équipement de restitution audio/vidéo 13).

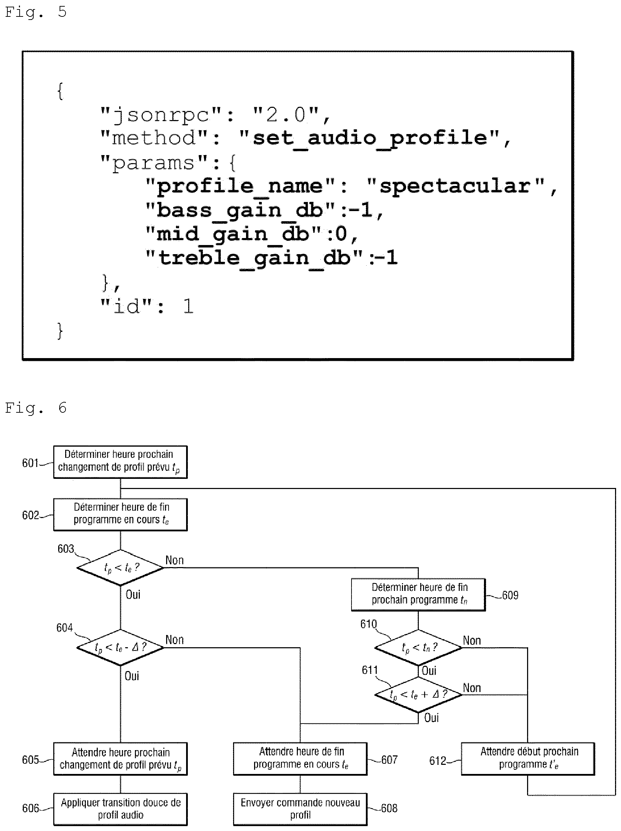

La figure 5 donne un exemple d'ordre envoyé par l'équipement décodeur 11 vers l'équipement de restitution audio 15 (ordre ici écrit selon un exemple non limitatif via le protocole JSON-RPC), ordre contenant à la fois un identifiant de profil audio et des paramètres. Sur réception de cet ordre, si l'équipement de restitution audio 15 reconnaît l'identifiant, il va donc regarder dans sa propre troisième table si d'autres paramètres que ceux transmis par l'équipement décodeur 11 et correspondants à l'identifiant sont à appliquer pour compléter les données transmises par l'ordre.

On a ainsi décrit selon une première option une installation et un procédé permettant d'adapter le signal audio restitué par l'équipement de restitution audio au type de programme visualisé sur l'équipement de restitution audio/vidéo.

Selon une deuxième option, l'installation est configurée pour adapter le signal audio restitué par l'équipement de restitution audio 15 en fonction de l'horaire.

A cet effet, l'équipement décodeur 11 comporte une horloge et génère un ordre de profil audio en fonction de l'horaire. Ainsi il peut par exemple ordonner un profil « normal » en journée et un profil « nuit » le soir et la nuit. Ce profil « nuit » peut par exemple comporter des paramètres tels que les fréquences basses sont atténuées (en effet il est connu que les basses portent plus loin et sont donc plus gênantes pour les voisins). Alternativement ou en complément, le profil « nuit » peut baisser globalement le volume tout en choisissant des paramètres d'égalisation tels que les basses et les aigus sont moins atténués que les médiums, ce qui est connu pour donner à l'auditeur une impression de volume plus élevé qu'il n'est réellement (cet effet était en particulier appelé « loudness » sur les vieilles chaînes Hi-Fi) . Alternativement ou en complément, le profil « nuit » peut activer un effet « compresseur » ou « limiteur » (pour plus d'information on pourra se reporter à l'article suivant https://fr.wikipedia.org/wiki/Compresseur_%28audio%29) qui diminue le volume des séquences bruyantes tout en préservant le volume des séquences calmes, ainsi les séquences les plus bruyantes (telles que les explosions dans un film) sont atténuées, mais les séquences calmes restent audibles.

L'équipement décodeur 11 comporte par exemple une table donnant pour chaque plage horaire une définition d'au moins une partie des paramètres (gain sur les basses, les médiums ...) et de préférence tous les paramètres définissant des profils audio et/ou une table donnant pour chaque plage horaire un identifiant du profil audio (« nuit », « jour » ...), l'équipement de restitution audio 15 comprenant alors une table associant lesdits identifiants à au moins une partie des paramètres constituant le profil audio correspondant et de préférence tous les paramètres. Le fonctionnement sera ainsi similaire à ce qui a été dit pour la première option en regard des trois variantes qui ont été décrites pour cette première option.

Par ailleurs, pour générer l'ordre, l'équipement décodeur 11 combine l'horaire planifié pour le changement de profil audio avec au moins une des informations extraites des métadonnées autre que l'indicateur de type du contenu du flux audio/vidéo.

Typiquement l'équipement décodeur 11 extrait des métadonnées un marqueur du flux audio/vidéo retranscrit par l'équipement audio/vidéo 13 (i.e. le programme en cours de lecture), une information de l'horaire de fin du programme et une information de l'horaire de fin du programme suivant. Si les métadonnées sont au format DVB-SI décrit à la section 5.2.4 de la norme ETSI EN 300 468, l'équipement décodeur 11 extrait ainsi des métadonnées comme marqueur du programme retranscrit « event_id » ainsi que les informations « start_time » et « duration » qui permettent à l'équipement décodeur 11 de calculer l'horaire de fin du programme en cours de lecture et l'horaire de fin du programme suivant.

Cette combinaison de l'horaire planifié pour le changement de profil audio avec au moins l'horaire de fin du programme en cours de visualisation permet de minimiser la gêne liée au changement de profil audio pour l'utilisateur par exemple en décalant l'instant de changement de profil audio pour l'aligner sur un changement de programme.

En référence à la figure 6, on va à présent s'attacher à décrire un procédé selon une première possibilité qui permet de combiner l'horaire planifié pour le changement de profil audio avec les horaires de fin du programme en cours et du prochain programme.

Ce procédé prévoit que si l'horaire prévu pour le changement de profil est proche d'un changement de programme, alors l'équipement décodeur 11 applique le changement de profil au moment du changement de programme. Avantageusement, si l'horaire prévu pour le changement de profil est éloigné de tout changement de programme, alors l'équipement décodeur 11 applique le changement de profil à l'horaire prévu en assurant une transition douce entre l'ancien et le nouveau profil.

À une étape 601, l'équipement décodeur 11 détermine l'horaire tₚ prévu pour le prochain changement de profil. À une étape 602, l'équipement décodeur 11 détermine l'horaire tₑ de fin du programme en cours à partir des métadonnées d'entrée.

À une étape 603, l'équipement décodeur 11 compare l'horaire tₚ prévu pour le prochain changement de profil et l'horaire tₑ de fin du programme en cours. Si l'horaire tₚ prévu pour le prochain changement de profil est antérieur à l'horaire tₑ de fin du programme en cours l'équipement décodeur 11 passe à une étape 604, sinon l'équipement décodeur 11 passe à une étape 609.

À l'étape 604, l'équipement décodeur 11 compare l'horaire tₚ prévu pour le prochain changement de profil et l'horaire tₑ de fin du programme en cours minoré d'un intervalle de temps Δ fixé. Si l'horaire tₚ prévu pour le changement de profil est antérieur à l'horaire tₑ-Δ de fin de programme en cours minoré, l'équipement décodeur 11 passe à une étape 605, sinon l'équipement décodeur passe à une étape 607. On peut par exemple choisir Δ égal à 5 minutes.

À l'étape 605, l'équipement décodeur 11 attend l'horaire tₚ prévu pour le prochain changement de profil, puis à une étape 606, l'équipement décodeur 11 envoie à l'équipement externe 15 au moins un ordre d'un nouveau profil audio à appliquer qui provoque une transition douce entre l'ancien profil audio et le nouveau profil audio. On expliquera plus loin dans la présente demande comment l'installation peut effectuer une transition douce.

À l'étape 607, l'équipement décodeur 11 attend l'horaire tₑ de fin du programme en cours, puis à une étape 608, l'équipement décodeur 11 envoie à l'équipement de restitution audio 15 un ordre d'un nouveau profil audio à appliquer.

À l'étape 609, l'équipement décodeur 11 détermine l'horaire tₙ de fin du prochain programme à partir des métadonnées d'entrée.

À une étape 610, l'équipement décodeur 11 compare l'horaire tₚ prévu pour le prochain changement de profil et l'horaire tₙ de fin du prochain programme. Si l'horaire tₚ prévu pour le prochain changement de profil est antérieur à l'horaire tₙ de fin du prochain programme l'équipement décodeur 11 passe à une étape 611, sinon l'équipement décodeur 11 passe à une étape 612.

À l'étape 611, l'équipement décodeur 11 compare l'horaire tₚ prévu pour le prochain changement de profil et l'horaire tₑ de fin du programme en cours majoré d'un intervalle de temps Δ fixé (par exemple l'intervalle de temps Δ est pris égal à 5 minutes). Si l'horaire tₚ prévu pour le changement de profil est antérieur à l'horaire tₑ+Δ de fin de programme en cours majoré l'équipement décodeur 11 passe à l'étape 607, sinon l'équipement décodeur passe à l'étape 612.

À l'étape 612, l'équipement décodeur 11 attend le début du prochain programme puis retourne à l'étape 602.

On va à présent s'attacher à décrire un procédé selon une deuxième possibilité qui permet de combiner l'horaire planifié pour le changement de profil audio avec les horaires de fin du programme en cours et du prochain programme.

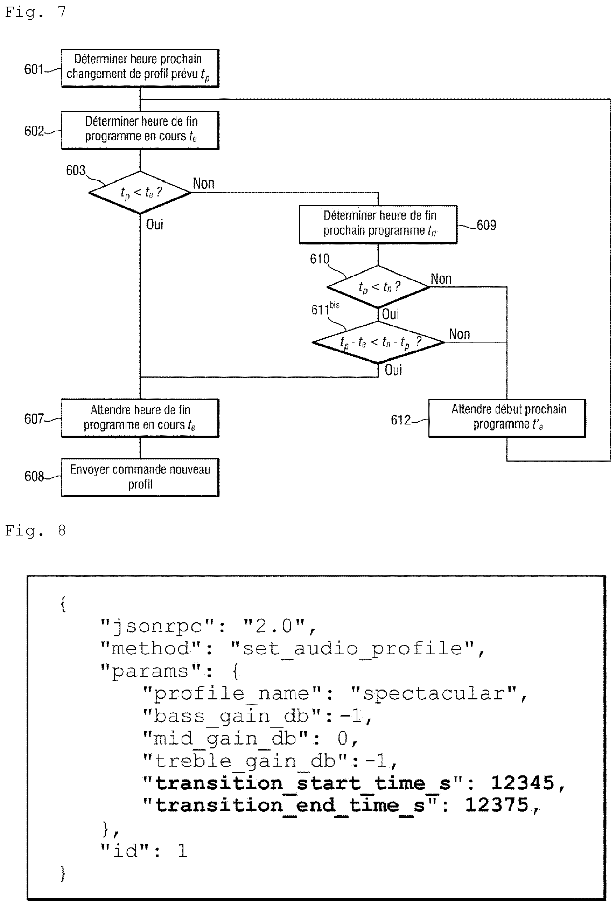

Cette deuxième possibilité est identique à la première possibilité à la différence que l'équipement décodeur 11 n'applique pas de transition douce. Dans cette deuxième possibilité, une fois atteint l'horaire tₚ prévu pour le prochain changement de profil à l'étape 605, l'équipement décodeur 11 passe à l'étape 608 et envoie à l'équipement de restitution audio 15 un ordre de nouveau profil audio. Une troisième possibilité de procédé permettant de combiner l'horaire planifié pour le changement de profil audio avec les horaires de fin du programme en cours et du prochain programme va être à présent décrite en relation avec la figure 7.

Dans cette troisième possibilité, l'équipement décodeur 11 aligne systématiquement le changement de profil sur la transition de programme la plus proche.

Ainsi à l'étape 603, si l'horaire tₚ prévu pour le prochain changement de profil est antérieur à l'horaire tₑ de fin du programme en cours, l'équipement décodeur 11 passe à l'étape 607 et attend la fin du programme en cours pour envoyer l'ordre de nouveau profil à l'équipement de restitution audio 15.

De même, à l'étape 611 bis, l'équipement décodeur 11 compare l'horaire tₚ prévu pour le prochain changement de profil à l'horaire tₑ de fin du programme en cours et à l'horaire tₙ de fin du prochain programme, puis si l'horaire tₚ prévu pour le prochain changement de profil est plus proche de l'horaire tₑ de fin du programme en cours (tₚ - tₑ < tₙ - tₚ) alors l'équipement décodeur 11 passe à l'étape 607, sinon l'équipement décodeur 11 passe à l'étape 612.

On va à présent décrire une quatrième possibilité de procédé de combiner l'horaire planifié pour le changement de profil audio avec les horaires de fin du programme en cours et du prochain programme.

Cette quatrième possibilité est identique à la troisième possibilité à la différence qu'à l'étape 608, l'équipement décodeur 11 effectue une transition douce vers le nouveau profil c'est-à-dire qu'en plus d'aligner systématiquement le changement de profil sur la transition de programme la plus proche, l'équipement décodeur 11 effectue également systématiquement une transition douce.

Bien entendu cette possibilité d'appliquer systématiquement une transition douce peut également être mise en oeuvre dans la première possibilité décrite. L'élément décodeur 11 peut ainsi effectuer une transition douce vers le nouveau profil à l'étape 608 de la figure 6 c'est-à-dire qu'en plus d'aligner systématiquement le changement de profil sur la transition de programme la plus proche, l'équipement décodeur 11 effectue également systématiquement une transition douce.

Avantageusement cette transition a une durée plus courte que la transition effectuée dans la première possibilité. Par exemple, à l'étape 608, l'équipement décodeur 11 effectue une transition douce d'une durée d'environ une seconde, tandis que pour la première possibilité, l'équipement décodeur 11 effectue une transition douce d'une durée de quelques dizaines de secondes. Par exemple, à l'étape 608, l'équipement décodeur 11 effectue une transition douce d'une durée d'une seconde, tandis que pour la première possibilité l'équipement décodeur 11 effectue une transition douce d'une durée de trente secondes.

On a ainsi décrit selon une deuxième option une installation et un procédé permettant d'adapter le signal audio restitué par l'équipement de restitution audio à l'horaire du type de programme restitué.

Selon une troisième option il est possible de combiner les deux premières options décrites.

En particulier, il est possible d'adapter le signal audio retranscrit par l'équipement de restitution audio 15 à partir de l'indicateur du type de contenu (comme dans la première option) mais de basculer d'un profil audio à un autre par une transition douce (comme dans la deuxième option).

En outre il est possible d'adapter le signal audio retranscrit par l'équipement de restitution audio 15 à partir de l'indicateur du type de contenu (comme dans la première option) mais également de l'horaire (comme dans la deuxième option) par combinaison des jeux de paramètres correspondants. Encore une fois on décrira plus loin comment combiner deux profils audio.

Quelle que soit l'option envisagée (indicateur de type de contenu et/ou horaire), l'équipement décodeur 11 est configuré pour pouvoir si voulu effectuer une transition douce lors d'un passage d'un premier profil audio à un deuxième profil audio.

A cet effet, et selon un premier mode de réalisation, l'équipement décodeur 11 détermine un instant de début de transition tₜₛ et un instant de fin de transition tₜₑ. Par exemple l'équipement décodeur 11 détermine un instant de transition tₜ et les instants de débuts et de fin de transition sont calculés pour être de part et d'autre de l'instant de transition tₜ : tₜₛ = tₜ - dt/2 et tₜₑ = tₜ + dₜ/2 avec dₜ une durée fixée. Par exemple, dₜ vaut 30 secondes si l'on vise une transition douce normale et 1 seconde si l'on vise une transition douce courte. L'instant de transition tₜ peut correspondre à l'horaire de fin de programme en cours tₑ, l'horaire prévu de changement de profil tₚ ... L'instant de transition tₜ peut par exemple être déterminé comme expliqué en relation avec la deuxième option. En remplacement c'est l'instant de début de transition tₜₛ qui est déterminé et l'instant de fin de transition tₜₑ est calculé égal à tₜₛ + dt. Alternativement, c'est l'instant de fin de transition tₜₑ qui est déterminé et l'instant de début de transition tₜₛ est calculé égal à tₜₑ - dₜ.

L'équipement décodeur 11 envoie donc à l'équipement de restitution audio 15 un ordre d'un nouveau profil à appliquer, ordre comprenant par ailleurs l'instant de début et de fin de transition tₜₛ et tₜₑ. La figure 8 donne un exemple d'ordre envoyé par l'équipement décodeur 11 vers l'équipement de restitution audio 15 (ordre ici écrit selon un exemple non limitatif via le protocole JSON-RPC), ordre contenant à la fois un identifiant d'un nouveau profil audio, des paramètres dudit nouveau profil audio et l'instant de début et de fin de transition tₜₛ et tₜₑ.

Pour tout instant t compris entre tₜₛ et tₜₑ, l'équipement de restitution audio 15 calcule alors un coefficient de combinaison α = (t - tₜₛ) / (tₜₑ - tₜₛ) et combine les paramètres de l'ancien profil audio et du nouveau profil audio en utilisant ce coefficient de combinaison. Encore une fois, on décrira plus loin comment l'installation exécute la combinaison de deux jeux de paramètres.

Selon un deuxième mode de réalisation, c'est l'équipement de restitution audio 15 qui calcule l'instant de début de transition tₜₛ et l'instant de fin de transition tₜₑ. A cet effet, l'ordre du nouveau profil audio à appliquer transmis par l'équipement décodeur 11 comprend également une durée de transition.

L'équipement de restitution audio 15 utilise l'instant où il reçoit l'ordre comme instant de début de transition tₜₛ et calcule l'instant de fin de transition tₜₑ à partir dudit instant de début de transition tₜₛ et de la durée de transition reçue.

Selon un troisième mode de réalisation, l'équipement décodeur 11 calcule lui-même le coefficient de combinaison α et envoie régulièrement à l'équipement de restitution audio 15 des ordres comportant ce coefficient à mesure que la transition progresse.

Selon un quatrième mode de réalisation, l'équipement décodeur 11 effectue lui-même la combinaison de profils audio et envoie régulièrement à l'équipement de restitution audio 15 des ordres comportant les paramètres combinés au fur et à mesure que la transition progresse.

Quelle que soit l'option envisagée (indicateur de type de contenu et/ou horaire), l'équipement décodeur 11 est configuré pour pouvoir si voulu effectuer une combinaison de deux profils audio. On va à présent décrire des alternatives différentes que l'installation peut mettre en oeuvre pour combiner deux profils audio. On retient que la combinaison peut se faire au niveau de l'équipement décodeur 11 ou de l'équipement de restitution audio 15. Selon une première alternative l'installation met en oeuvre une combinaison simple.

L'installation combine deux jeux de paramètres associé chacun à un profil audio afin d'obtenir un seul jeu de paramètres à appliquer. Par exemple les deux jeux de paramètres peuvent être d'une part le jeu de paramètres de l'ordre envoyé de l'équipement décodeur 11 vers l'équipement de restitution audio 15 conformément à la figure 5 et d'autre part un jeu de paramètres extrait d'une table dans la mémoire de l'équipement de restitution conformément à la figure 4b.

Pour combiner les deux jeux de paramètres, l'équipement de restitution audio 15 regarde pour chaque paramètre la valeur provenant du premier jeu et la valeur provenant du deuxième jeu et construit une valeur combinée à appliquer en fonction desdites deux valeurs :
- Si l'un des deux jeux de paramètres ne contient pas de valeur pour l'un des paramètres alors la valeur combinée est la valeur provenant de l'autre jeu de paramètres ;
- Si les deux jeux de paramètres contiennent des valeurs pour l'un des paramètres, alors la valeur combinée dépend du type de paramètre :
   - Certains paramètres sont des niveaux de gains ou de volume. C'est par exemple le cas d'un gain ou d'un niveau de filtre. Pour ces paramètres :
      * Selon un premier mode de réalisation, la valeur combinée est la plus petite ou la plus grande des valeurs de ce paramètre provenant des deux jeux de paramètres exprimées en décibels.
      * Selon un deuxième mode de réalisation, la valeur combinée est la moyenne des valeurs de ce paramètre provenant des deux jeux de paramètres exprimées en décibels.
      * Selon un troisième mode de réalisation, la valeur combinée est la somme des valeurs de ce paramètre provenant des deux jeux de paramètres exprimées en décibels. Ce troisième mode de réalisation est particulièrement adapté pour les gains, mais il est moins bien adapté pour les niveaux.
   - Certains paramètres sont des durées. C'est par exemple le cas d'une durée de réverbération. Pour ces paramètres :
      * Selon un premier mode de réalisation, la valeur combinée est la plus petite ou la plus grande des valeurs de ce paramètre provenant des deux jeux de paramètres.
      * Selon un deuxième mode de réalisation, la valeur combinée est la moyenne des valeurs de ce paramètre provenant des deux jeux de paramètres.
   - Certains paramètres sont des valeurs booléennes. C'est par exemple le cas pour savoir si un filtre doit être appliqué ou non. Pour ces paramètres :
      * Si les deux jeux de paramètres ont la même valeur, alors la valeur combinée est égale à cette même valeur.
      * Si les deux jeux de paramètres ont des valeurs différentes, alors :
         Selon un premier mode de réalisation, la valeur combinée est égale à la valeur logique « vrai. »
         Selon un deuxième mode de réalisation, la valeur combinée est égale à la valeur logique « faux. »
         Selon un troisième mode de réalisation, l'élément (par exemple le filtre) contrôlé par la valeur du paramètre booléen est également associé à un paramètre secondaire affectant l'importance de son effet. C'est par exemple le cas du paramètre « niveau » pour un filtre de réverbération. Dans ce cas, la valeur combinée du paramètre booléen est égale à la valeur logique « vrai » et la valeur combinée du paramètre secondaire associé voit sa valeur réduite (vis-à-vis de la valeur du paramètre secondaire associé non combiné). Par exemple la valeur combinée du paramètre secondaire « niveau » est égale à la valeur du paramètre secondaire « niveau » dans le jeu de paramètres pour lequel le paramètre « filtre » est « vrai » moins une valeur fixe prédéterminée (par exemple 3 décibels).
- En remplacement ou en complément, si les deux jeux de paramètres contiennent des valeurs pour l'un des paramètres, alors la valeur combinée est déterminée selon la deuxième alternative décrite ci-dessous en utilisant une valeur prédéterminée pour le coefficient de combinaison α et par exemple 0,5.

Selon une deuxième alternative l'installation met en oeuvre une combinaison pondérée.

L'installation combine deux jeux de paramètres associé chacun à un profil audio afin d'obtenir un seul jeu de paramètres à appliquer en respectant un coefficient de combinaison α évolutif. Par exemple les deux jeux de paramètres peuvent être les jeux de début et de fin d'une transition douce et le coefficient de combinaison α est représentatif d'un avancement dans la transition tel que α = 0 au début de la transition et α = 1 à la fin de la transition.

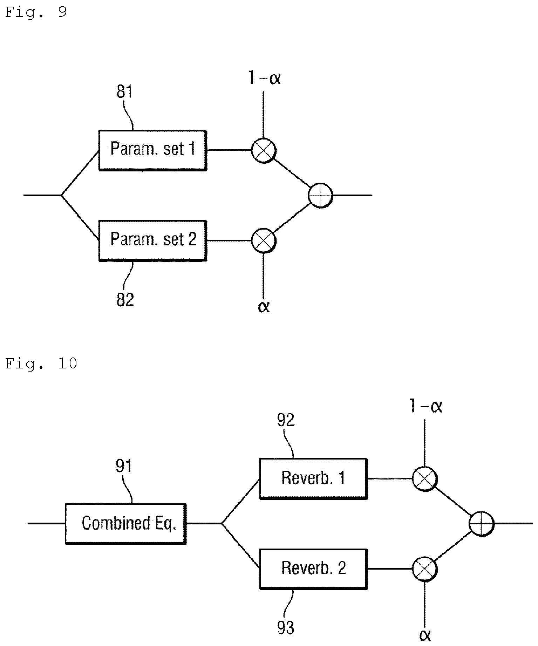

En référence à la figure 9, selon un premier mode de réalisation, le signal audio réceptionné par l'équipement de restitution audio 15 est copié et chaque copie est traitée indépendamment avec l'un des deux jeux de paramètres par un traitement respectivement 81, 82. Ensuite les deux copies traitées s₁, s₂ sont combinées par une moyenne pondérée par le coefficient de combinaison α pour obtenir un signal audio modifié à restituer sₒ : sₒ = (1-α) xs₁ + α×s₂.

Il convient de noter que ce premier mode de réalisation peut être indifféremment utilisé si les traitements 81 et 82 sont des traitements différents ou si les traitements 81 et 82 sont des traitements identiques. De plus ce mode de réalisation peut être utilisé même si l'un des traitements 81 ou 82 ne modifie pas le signal audio réceptionné par l'équipement de restitution audio 15, ce qui permet par exemple de réaliser une activation ou une désactivation douce d'un paramètre et donc d'un effet sonore.

Le premier mode de réalisation propose ainsi une combinaison de deux jeux de paramètres par traitements indépendants desdits jeux.

Ce premier mode de réalisation présente l'avantage d'être générique : il peut s'appliquer à n'importe quelle paire de traitements 81 et 82. En revanche ce premier mode de réalisation est relativement coûteux en calcul puisqu'il impose de traiter deux fois le signal audio réceptionné par l'équipement de restitution audio 15.

Selon un deuxième mode de réalisation, les paramètres des deux jeux sont combinés indépendamment deux par deux pour obtenir un jeu de paramètres combinés qui est ensuite appliqué en une seule fois sur le signal audio réceptionné par l'équipement de restitution audio 15.

Selon ce deuxième mode de réalisation :
- Certains paramètres ont des valeurs numériques. Ces paramètres sont combinés par une moyenne pondérée par le coefficient de combinaison α.
- Certains paramètres sont des valeurs booléennes qui définissent par exemple si un filtre doit être appliqué ou non. Pour ces paramètres :
- Si les deux jeux de paramètres ont la même valeur, alors la valeur combinée est égale à cette même valeur.
- Si les deux jeux de paramètres ont des valeurs différentes, alors l'un des jeux de paramètres, dit jeu de paramètres actif, contient la valeur « vrai » et l'autre jeu de paramètres, dit jeu de paramètres inactif, contient la valeur « faux. » Dans ce cas, le paramètre combiné prend la valeur « vrai. » En outre :
- Selon une première option, les autres paramètres secondaires de l'élément contrôlé par ledit paramètre booléen sont combinés en prenant les valeurs du jeu de paramètres actif et en imposant comme valeurs pour le jeu de paramètres inactif des valeurs minimales prédéterminées (et non les valeurs réelles dudit jeu de paramètres inactif). Par exemple si le paramètre booléen contrôle l'activation d'un filtre, le paramètre secondaire de niveau du filtre du jeu de paramètres inactif est pris à une valeur de -60 dB et le paramètre secondaire de durée d'application du filtre du jeu de paramètres inactifs est pris à une valeur de zéro.
- Selon une deuxième option, l'élément contrôlé par ledit paramètre booléen comporte un paramètre secondaire affectant l'importance de son effet. Dans ce cas, ledit paramètre est combiné en prenant la valeur du jeu de paramètre actif et en imposant comme valeur pour le jeu de paramètres inactif une valeur minimale prédéterminée (et non la valeur réelle). Les autres paramètres dudit élément prennent une valeur égale à la valeur du jeu de paramètres actif. Par exemple si le paramètre booléen contrôle l'activation d'un filtre, le paramètre secondaire de niveau du filtre du jeu de paramètres inactif est pris à une valeur de -60 dB. En revanche la valeur combinée du paramètre secondaire de durée d'application du filtre est prise égale à la valeur du paramètre secondaire de durée d'application du filtre dans le jeu de paramètres actif.

Un troisième mode de réalisation va être à présent décrit combinant les deux modes de réalisation précités. Ce troisième mode de réalisation propose donc une combinaison hybride de deux jeux de paramètres.

Dans ce troisième mode de réalisation, certains paramètres sont ainsi combinés indépendamment deux par deux afin d'obtenir un jeu de paramètres combinés partiel pouvant être appliqué en une seule fois sur le signal audio réceptionné par l'équipement de restitution audio (comme dans le deuxième mode de réalisation), et d'autres paramètres sont combinés par traitements indépendants (comme dans le premier mode de réalisation).

Par exemple en référence à la figure 10, les paramètres d'égalisation peuvent être combinés pour être appliqués en une seule fois 91 sur le signal, tandis que les paramètres d'un filtre, type filtre de réverbération, sont appliqués indépendamment 92, 93 sur le signal (via des copies du signal) et combinés a posteriori.

Bien entendu, l'invention n'est pas limitée au mode de réalisation décrit ci-dessus et on peut y apporter des variantes de réalisation sans sortir du cadre de l'invention tel que défini par les revendications.

Ainsi, bien qu'ici l'équipement décodeur soit un boîtier décodeur, l'équipement décodeur pourra être tout autre équipement capable de réaliser un décodage audio/vidéo, et par exemple une console de jeu, un ordinateur, une *smart-*TV, une tablette numérique, un téléphone portable, un décodeur de télévision numérique, un boîtier décodeur STB, etc.

Bien qu'ici l'équipement de restitution vidéo soit un équipement de restitution audio/vidéo cela pourra être tout autre type d'équipement de restitution vidéo comme une télévision, un vidéoprojecteur, une tablette, un téléphone portable, etc. L'équipement vidéo pourrait ainsi être d'une seule entité avec l'équipement décodeur.

De même, bien qu'ici l'équipement de restitution audio soit une enceinte connectée externe, ceci pourrait être un autre équipement muni d'un haut-parleur, par exemple une barre de son. L'équipement audio ne sera toutefois jamais incorporé à l'équipement décodeur.

On pourrait avoir un nombre plus important d'éléments de restitution vidéo et/ou d'éléments de restitution audio et/ou d'éléments décodeurs que ce qui a été indiqué.

Bien qu'ici le flux audio/vidéo et les métadonnées soient contenus dans un même flux multimédia d'entrée, le flux audio/vidéo et les métadonnées pourront être contenus dans deux flux d'entrée différents transmis en parallèle à l'équipement décodeur. Ainsi, selon une option non limitative, si le réseau de diffusion est une source Internet fournissant un flux audio/vidéo avec un protocole DASH (décrit par exemple dans la norme ISO/IEC23009-1, « Dynamic adaptive streaming over HTTP (DASH)), les métadonnées pourront être incluses dans un manifeste MPD correspondant (manifeste MPD décrit par exemple à la section 5.7 de ladite norme ISO/IEC23009-1).

Le profil audio pourra être défini par un nombre différent de paramètres que ce qui a été indiqué et/ou par des paramètres différents.

En l'absence de métadonnées ou si les métadonnées ne comprennent pas d'information sur le programme visualisé, l'installation pourra être configurée pour appliquer un profil audio par défaut et prédéfini au niveau de l'équipement de restitution audio.

## Revendications

1. Installation comprenant au moins un équipement décodeur et un équipement de restitution audio, l'équipement décodeur (11) comprenant :
- une première sortie reliée à l'équipement de restitution audio (15),
- une deuxième sortie pouvant être reliée à un équipement de restitution vidéo (13),
- une interface de communication agencée pour recevoir en service un flux d'entrée audio/vidéo et des métadonnées d'entrée,
- des moyens de traitement agencés pour :
- traiter le flux d'entrée audio/vidéo afin de transmettre un signal audio au moins à destination de l'équipement de restitution audio et un signal vidéo à destination de l'équipement de restitution vidéo, **caractérisé en ce que** les moyens de traitement sont agencés pour extraire des métadonnées d'entrée au moins une information sur le flux d'entrée audio/vidéo et pour générer en conséquence, à destination de l'équipement de restitution audio, un ordre d'un profil audio à appliquer fonction de ladite au moins une information,
dans lequel la au moins une information est un horaire, l'équipement de restitution audio comprenant une interface de communication agencée pour recevoir en service de l'équipement décodeur le signal audio et l'ordre d'un profil audio à appliquer, l'équipement de restitution audio comprenant des moyens de traitement pour adapter le signal audio en fonction dudit ordre,
l'équipement décodeur étant ainsi configuré pour fournir à l'équipement de restitution audio à la fois le signal audio brut et à la fois un ordre d'adaptation dudit signal afin que l'adaptation puisse ensuite se faire au sein de l'équipement de restitution audio.

2. Installation selon la revendication 1, dans laquelle la au moins une information est un horaire de fin d'un programme contenu dans le flux d'entrée audio/vidéo et restitué en service par les équipements de restitution audio et de restitution vidéo.

3. Installation selon la revendication 2, dans laquelle les moyens de traitement extraient également des métadonnées d'entrée une information additionnelle qui est un horaire de fin d'un programme qui est contenu dans le flux d'entrée audio/vidéo et qui sera restitué en service par les équipements de restitution audio et de restitution vidéo après le programme en cours de restitution par les équipements de de restitution audio et de restitution vidéo.

4. Installation selon l'une des revendications 1 à 3, configurée pour aligner un changement de profil audio lors d'un changement de programme.

5. Installation selon l'une des revendications 1 à 4, dans laquelle les moyens de traitement extraient également des métadonnées d'entrée une autre information additionnelle qui est un indicateur du type de contenu du flux d'entrée audio/vidéo.

6. Installation selon la revendication 5, dans laquelle les moyens de traitement comprennent au moins une table mettant en relation des paramètres définissant au moins en partie un profil audio pour chaque indicateur.

7. Installation selon la revendication 5 ou la revendication 6, dans laquelle les moyens de traitement comprennent au moins une table mettant en relation pour chaque indicateur, un identifiant de profil audio.

8. Installation selon l'une des revendications 1 à 7, dans laquelle le profil audio est défini au moins par un paramètre d'égalisation du signal audio.

9. Installation selon l'une des revendications 1 à 8, dans laquelle le profil audio est défini au moins par un effet compresseur ou limiteur.

10. Installation selon l'une des revendications 1 à 9, dans laquelle le profil audio est également fonction de l'horaire à laquelle le flux audio/vidéo est restitué.

11. Installation selon l'une des revendications 1 à 10, configurée pour calculer une période de transition entre deux profils audio.

12. Installation selon l'une des revendications 1 à 11, configurée pour ordonner à l'équipement de restitution audio de calculer une période de transition entre deux profils audio.

13. Installation selon la revendication 11 ou la revendication 12, dans laquelle la transition entre deux profils est provoquée par un changement d'horaire à laquelle le flux audio/vidéo est restitué et/ou à un changement de programme contenu dans le flux d'entrée audio/vidéo et restitué en service par les équipements de restitution audio et de restitution vidéo.

14. Installation selon l'une des revendications 1 à 13, configurée pour combiner deux profils audio.

15. Installation selon l'une des revendications 1 à 14, configurée pour ordonner à l'équipement de restitution audio de combiner deux profils audio.

16. Installation selon l'une des revendications 1 à 15, configurée pour opérer un changement de profil audio à un horaire donné indiqué par l'équipement décodeur.

17. Installation selon l'une des revendications 1 à 16, configurée pour assurer une période de transition entre deux profils audio.

18. Installation selon la revendication 14, dans laquelle pour au moins un paramètre audio, l'équipement de restitution audio (15) copie le signal audio reçu en service de l'équipement décodeur (11), applique un paramètre audio sur chaque copie et combine les deux copies pour récupérer un signal audio combiné.

19. Installation selon l'une des revendications 1 à 18, dans laquelle pour au moins un paramètre audio, l'équipement de restitution audio (15) applique en service un paramètre audio combiné directement sur le signal audio reçu de l'équipement décodeur (11).

20. Procédé mis en oeuvre dans l'installation selon l'une des revendications 1 à 19, comprenant une étape de génération par l'équipement décodeur d'un ordre d'un profil audio à appliquer et une étape d'application du profil audio par l'équipement de restitution audio.

21. Programme d'ordinateur comprenant des instructions qui conduisent l'équipement décodeur et l'équipement de restitution audio de l'installation selon l'une des revendications 1 à 19 à exécuter les étapes du procédé selon la revendication 20.

22. Support d'enregistrement lisible par ordinateur, sur lequel est enregistré le programme d'ordinateur selon la revendication 21.

## Patentansprüche

1. Anlage, umfassend mindestens ein Decodiergerät und ein Audiowiedergabegerät, wobei das Decodiergerät (11) umfasst:
- einen ersten Ausgang, der mit dem Audiowiedergabegerät (15) verbunden ist,
- einen zweiten Ausgang, der mit einem Videowiedergabegerät (13) verbunden werden kann,
- eine Kommunikationsschnittstelle, die ausgebildet ist, im Gebrauch einen Audio/Video-Eingangsstrom und Eingangsmetadaten zu empfangen,
- Verarbeitungsmittel, die ausgebildet sind, um:
- den Audio/Video-Eingangsstrom zu verarbeiten, um ein Audiosignal zumindest an das Audiowiedergabegerät und ein Videosignal an das Videowiedergabegerät zu übertragen,
**dadurch gekennzeichnet, dass** die Verarbeitungsmittel ausgebildet sind, aus den Eingangsmetadaten mindestens eine Information über den Audio/Video-Eingangsstrom zu extrahieren und folglich für das Audiowiedergabegerät eine Anweisung eines in Abhängigkeit von der genannten mindestens einen Information anzuwendenden Audioprofils zu erzeugen,
wobei die mindestens eine Information eine Uhrzeit ist,
wobei das Audiowiedergabegerät eine Kommunikationsschnittstelle umfasst, die ausgebildet ist, im Gebrauch von dem Decodiergerät das Audiosignal und die Anweisung eines anzuwendenden Audioprofils zu empfangen, wobei das Audiowiedergabegerät Verarbeitungsmittel umfasst, um das Audiosignal in Abhängigkeit von der Anweisung anzupassen,
wobei das Decodiergerät somit konfiguriert ist, dem Audiowiedergabegerät gleichzeitig das rohe Audiosignal und eine Anpassungsanweisung des Signals zu liefern, damit die Anpassung dann im Inneren des Audiowiedergabegeräts erfolgen kann.

2. Anlage nach Anspruch 1, bei der die mindestens eine Information eine Endzeit eines Programms ist, das in dem Audio/Video-Eingangsstrom enthalten ist und im Gebrauch von dem Audiowiedergabegerät und dem Videowiedergabegerät wiedergegeben wird.

3. Anlage nach Anspruch 2, bei der die Verarbeitungsmittel ferner aus den Eingangsmetadaten eine zusätzliche Information extrahieren, die eine Endzeit eines Programms ist, das in dem Audio/Video-Eingangsstrom enthalten ist und das im Gebrauch von dem Audiowiedergabegerät und dem Videowiedergabegerät nach dem Programm wiedergegeben wird, das von dem Audiowiedergabegerät und dem Videowiedergabegerät aktuell wiedergegeben wird.

4. Anlage nach einem der Ansprüche 1 bis 3, die konfiguriert ist, einen Audioprofilwechsel bei einem Programmwechsel auszurichten.

5. Anlage nach einem der Ansprüche 1 bis 4, bei der die Verarbeitungsmittel ferner aus den Eingangsmetadaten eine weitere zusätzliche Information extrahieren, die ein Indikator für eine Art des Inhalts des Audio/Video-Eingangsstroms ist.

6. Anlage nach Anspruch 5, bei der die Verarbeitungsmittel mindestens eine Tabelle umfassen, die Parameter in Beziehung setzt, die zumindest teilweise ein Audioprofil für jeden Indikator definieren.

7. Anlage nach Anspruch 5 oder Anspruch 6, bei der die Verarbeitungsmittel mindestens eine Tabelle umfassen, die für jeden Indikator eine Audioprofilkennung in Beziehung setzt.

8. Anlage nach einem der Ansprüche 1 bis 7, bei der das Audioprofil mindestens durch einen Parameter zur Entzerrung des Audiosignals definiert ist.

9. Anlage nach einem der Ansprüche 1 bis 8, bei der das Audioprofil mindestens durch einen Kompressor- oder Begrenzer-Effekt definiert ist.

10. Anlage nach einem der Ansprüche 1 bis 9, bei der das Audioprofil ferner abhängig von der Uhrzeit ist, zu der der Audio/Videostrom wiedergegeben wird.

11. Anlage nach einem der Ansprüche 1 bis 10, die konfiguriert ist, eine Übergangsperiode zwischen zwei Audioprofilen zu berechnen.

12. Anlage nach einem der Ansprüche 1 bis 11, die konfiguriert ist, dem Audiowiedergabegerät anzuordnen, eine Übergangsperiode zwischen zwei Audioprofilen zu berechnen.

13. Anlage nach Anspruch 11 oder Anspruch 12, bei der der Übergang zwischen zwei Profilen durch einen Wechsel der Uhrzeit verursacht wird, zu der der Audio/Videostrom wiedergegeben wird und/oder bei einem Wechsel des Programms, das in dem Audio/Video-Eingangsstrom enthalten ist und das im Gebrauch von dem Audiowiedergabegerät und dem Videowiedergabegerät wiedergegeben wird.

14. Anlage nach einem der Ansprüche 1 bis 13, die konfiguriert ist, zwei Audioprofile zu kombinieren.

15. Anlage nach einem der Ansprüche 1 bis 14, die konfiguriert ist, dem Audiowiedergabegerät anzuordnen, zwei Audioprofile zu kombinieren.

16. Anlage nach einem der Ansprüche 1 bis 15, die konfiguriert ist, einen Audioprofilwechsel zu einer gegebenen Uhrzeit, die von dem Decodiergerät bestimmt wird, durchzuführen.

17. Anlage nach einem der Ansprüche 1 bis 16, die konfiguriert ist, eine Übergangsperiode zwischen zwei Audioprofilen sicherzustellen.

18. Anlage nach Anspruch 14, bei der für mindestens einen Audioparameter die Audiowiedergabevorrichtung (15) das beim Gebrauch des Decodiergeräts (11) empfangene Audiosignal kopiert, einen Audioparameter auf jede Kopie anwendet und die beiden Kopien kombiniert, um ein kombiniertes Audiosignal wiederzugewinnen.

19. Anlage nach einem der Ansprüche 1 bis 18, bei der für mindestens einen Audioparameter das Audiowiedergabegerät (15) im Gebrauch einen kombinierten Audioparameter direkt auf das von dem Decodiergerät (11) empfangene Audiosignal anwendet.

20. Verfahren, das in der Anlage nach einem der Ansprüche 1 bis 19 durchgeführt wird, umfassend einen Schritt der Erzeugung einer Anweisung eines anzuwendenden Audioprofils durch das Decodiergerät und einen Schritt der Anwendung des Audioprofils durch die Audiowiedergabevorrichtung.

21. Computerprogramm, umfassend Anweisungen, die das Decodiergerät und das Audiowiedergabegerät der Anlage nach einem der Ansprüche 1 bis 19 dazu veranlassen, die Schritte des Verfahrens nach Anspruch 20 auszuführen.

22. Computerlesbarer Aufzeichnungsträger, auf dem das Computerprogramm nach Anspruch 21 gespeichert ist.

## Claims

1. Installation comprising at least one decoder equipment and an audio playback equipment, the decoder equipment (11) comprising:
· a first output suitable for connecting to audio playback equipment (15);
· a second output suitable for connecting to video playback equipment (13);
· a communication interface arranged in service to receive both an incoming audio/video stream and also incoming metadata;
· processor means arranged:
- to process the incoming audio/video stream in order to supply an audio signal at least to the audio playback equipment and a video signal to the video playback equipment;
**characterized in that** the processor means are arranged to extract from the incoming metadata information about the incoming audio/video stream and consequently to generate an order for the audio playback equipment, the order specifying an audio profile that is to be applied as a function of said information;
wherein the information comprises a time the audio playback equipment including a communication interface arranged in service to receive from decoder equipment both an audio signal and also an order for an audio profile that is to be applied, the audio playback equipment including processor means for adapting the audio signal as a function of said order,
the decoder equipment being thus configurated to supply the audio playback equipment both with the raw audio signal and also with an order to adapt said raw signal, with the adaptation then taking place within the audio playback equipment.

2. Installation according to claim 1, wherein the information is an end time of a program contained in the incoming audio/video stream and played back in service by the audio playback equipment and by the video playback equipment.

3. Installation according to claim 2, wherein the processor means also extract, from the incoming metadata, additional information comprising an end time of a program that is contained in the incoming audio/video stream and that is going to be played back in service by the audio playback equipment and by the video playback equipment after the program currently being played back by the audio playback equipment and by the video playback equipment.

4. Installation according to any one of claims 1 to 3, configured to cause an audio profile change to coincide with a program change.

5. Installation according to any one of claims 1 to 4, wherein the processor means also extract from the incoming metadata other additional information comprising a content type descriptor of the incoming audio/video stream.

6. Installation according to claim 5, wherein the processor means include at least one table associating each descriptor with parameters defining an audio profile, at least in part.

7. Installation according to claim 5 or claim 6, wherein the processor means include at least one table associating each descriptor with an audio profile identifier.

8. Installation according to any one of claims 1 to 7, wherein the audio profile is defined at least by a parameter for equalizing the audio signal.

9. Installation according to any one of claims 1 to 8, wherein the audio profile is defined at least by a compressor or limiter effect.

10. Installation according to any one of claims 1 to 9, wherein the audio profile is also a function of the time at which the audio/video stream is played back.

11. Installation according to any one of claims 1 to 10, configured to calculate a transition period between two audio profiles.

12. Installation according to any one of claims 1 to 11, configured to order the audio playback equipment to calculate a transition period between two audio profiles.

13. Installation according to claim 11 or claim 12, wherein the transition between two profiles is caused by a change of time at which the audio/video stream is to be played back and/or a change of program contained in the incoming audio/video stream that is played back in service by the audio playback equipment and by the video playback equipment.

14. Installation according to any one of claims 1 to 13, configured to combine two audio profiles.

15. Installation according to any one of claims 1 to 14, configured to order the audio playback equipment to combine two audio profiles.

16. Installation according to any one of claims 1 to 15, configured to change audio profile at a given time specified by the decoder equipment.

17. Installation according to any one of claims 1 to 16, configured to ensure a transition period between two audio profiles.

18. Installation according to claim 14, wherein for at least one audio parameter, the audio playback equipment (15) duplicates the audio signal it receives in service from the decoder equipment (11), applies respective audio parameters to each copy, and combines the two copies in order to obtain a combined audio signal.

19. Installation according to any one of claims 1 to 18, wherein for at least one audio parameter, in service, the audio playback equipment (15) applies a combined audio parameter directly to the audio signal received from the decoder equipment (11).

20. A method performed by the installation according to any one of claims 1 to 19, comprising the step of generating an order by the decoder equipment for an audio profile that is to be applied and the step of applying the audio profile by the audio playback equipment.

21. A computer program including instructions for causing the decoder equipment and the audio playback equipment of the installation according to any one of claims 1 to 19, to execute the steps of the method according to claim 20.

22. A computer readable storage medium storing the computer program according to claim 21.
